# EUROPEAN PATENT APPLICATION

(11) **EP 2 357 032 A1**
(43) Date of publication of application: **17.08.2011**
(21) Application number: 10153839.5
(22) Date of filing: 17.02.2010
(51) Int. Cl.: B01D 46/00

(54) **An outer frame for a fluid filter and a fluid filter**

(71) Applicant: Dinair Ekonomifilter AB, 592 22 Vadstena (SE)
(72) Inventor: Ödling, Patrik, 592 30, VADSTENA (SE)
(74) Representative: Wiklund, Ronney

(57) **Abstract**

An outer frame (2) for a fluid filter (1) is provided, which outer frame (2) defines an inlet (3) which is adapted to receive a filter element (4). The outer frame comprises a profile element (10), defining a channel (6). The outer frame is characterized in that the outer frame (2) comprises a reinforcing element (7), arranged within the channel (6) of the profile element (10). Also provided is a fluid filter (1) comprising the outer frame (2).

## Description

### Technical Field

The present disclosure relates to fluid filters, and in particular to an outer frame of a fluid filter. The invention also relates to a fluid filter comprising the outer frame.

### Background

Fluid cleaning filters, such as air cleaning filters, wherein the filters are used for removing particulate material from fluid streams are included in various arrangements such as Heating, Ventilation and Air conditioning (HVAC) arrangements. Typically, an air cleaning filter comprises an outer frame, in which a filter element is provided for filtration of an air stream passing through the filter element. A well-known filter element for air cleaning filters comprises a carded nonwoven material of fibers. This material may be comprised of materials such as various polymers, cotton, rayon, acrylics etc.

A known outer frame of the above-mentioned type is disclosed in US 6,451,079 B1. The outer frame disclosed in US 6,451,079 B1 is made from four profile elements, which are joined to one another at the corners of the outer frame by means of corner connectors. The profile elements have an essentially U-shaped cross section with an inwardly opened interior space.

A disadvantage with an outer frame according to US 6,451,079 B1 is that it is complicated to assemble, and that a great number of components are needed for its manufacture.

Furthermore, there is a risk that the outer frame will disassemble unintentionally since the corner connectors might easily come off.

The material used to create the profile elements in US 6,451,079 B1 needs to have a relatively large thickness, such that the frame gets rigid enough although the profile elements are hollow. A large thickness implies that a large amount of material needs to be used, resulting in high manufacturing cost as well as a noticeable amount of waste material, when the fluid filter with the frame finally is disposed.

Accordingly, there is a need for an outer frame for a fluid filter, which outer frame is rigid, easy to manufacture at a low cost, and disposable.

### Summary

In view of the aforementioned respects of known fluid filters, an object of the invention is to create an improved and/or alternative solution for fluid filters that may alleviate at least some of the mentioned drawbacks with present fluid filters.

The object is wholly or partially achieved by an outer frame for a fluid filter and a fluid filter according to the respective appended independent claims. Embodiments are set forth in the appended dependent claims, in the following description and in the drawings.

According to a first aspect of the invention, there is provided an outer frame for fluid filters that defines an inlet which is adapted to receive a filter element. The outer frame comprises a profile element, defining a channel, and is characterized in that the outer frame comprises a reinforcing element comprising a corrugated material. The reinforcing element is arranged within the channel of the profile element.

The reinforcing element, positioned in the channel defined by the profile element provides stability and rigidity to the outer frame, even when a low amount of material is used. The profile element can have thinner walls than if a reinforcing element would not have been used. The corrugated material provides a lightweight reinforcement material which contributes to providing the required stability and rigidity. Thereby, the amount of material required is kept low, as compared to, for example, a rigid material. Examples of suitable reinforcing element material and embodiments will be discussed further below, but the reinforcing element could not be formed from a material that does not add to providing the required rigidity and stability. For example, the reinforcing element material may as an alternative not be a soft, foamed plastic.

The outer frame provides the possibility of easy manufacturing and the possibility of using relatively low amount of material at manufacturing. This is economically advantageous during, for example, manufacturing of the outer frame, and provides a less amount of waste material, when filter including its outer frame is worn out and needs to be replaced.

The presence of a channel in the profile element makes the profile element hollow, which is also material saving.

According to an embodiment, the profile element may be formed by a plurality of profile element portions. The cross section of each profile element portions has an essentially U-shaped periphery.

According to another embodiment, each profile element portion may have a base wall, distal to the inlet, and first and second opposing side walls, extending in a plane at an angle to a main plane of the base wall. Thereby, they define the channel which is arranged to receive the reinforcing element.

Such an arrangement of the outer frame provides an easy manufacturing of the outer frame at low costs while the outer frame is rigid and stabile. The side walls may extend substantially perpendicularly to the main plane of the base wall.

According to another embodiment, each profile element portion may have a securing element, arranged to secure the reinforcing element in the channel.

By providing such a securing element, the reinforcing element will keep its position in the channel, such that the enhanced stability is provided where it is most needed. As will be appreciated from the detailed description, the reinforcing element may be enclosed on a closed channel, the channel being, for example, defined by the walls of a profile element portion and the securing element. Such an arrangement may provide the enhanced stability.

According to another embodiment, the securing element may comprise a first locking portion, connected to the first side wall and having a portion extending in a direction essentially parallel to the base wall, towards the second side wall.

Such arrangement of a locking portion provides a way of safely securing the reinforcing element, which arrangement is easy to manufacture, wherein reinforcing element is easy to assemble into the outer frame.

According to another embodiment, the securing element may comprise a second locking portion, connected to the second side wall and having a portion extending in a direction essentially parallel to the base wall, towards the first side wall.

By providing an additional locking portion, further securing of the reinforcing element is provided, which in turn may also provide additional rigidity to the outer frame.

According to yet another embodiment, the profile element portion may be formed by folding one piece of material into a requested shape.

By providing profile element portions which are formed in this way, a simple manufacturing method is achieved.

According to yet another embodiment, at least two profile elements may be formed integrally.

In this way, the risk of unintentional disassembly of the outer frame is reduced. Also provided is a possibility of easy manufacturing.

According to one embodiment, the profile element may comprise or consist of a plastic material, a metal and/or paper.

The plastic material may, for example, be of polyolefin, in particular polyethylene and/or polypropylene. The plastic material may be a biodegradable plastic material, such as a plastic material of polylactic acid. Combinations of the different plastics may also be encountered.

The outer frame with the reinforcing element provides the possibility of using less profile element material, while maintain the rigidity of the outer frame.

According to yet another embodiment, the profile element may be made of a plastic material. The thickness of a profile element of a plastic material may e.g. be reduced from around 2 mm to around 1 mm, when using the reinforcing element as compared to not using it.

This is favorable when disposing and/or recycling the outer frame or the outer frame material.

According to yet another embodiment, the profile element may be made of a biodegradable plastic material.

In this way the profile element is made echo-friendly, exhibiting a low degree of environmental influence.

According to another embodiment, the reinforcing element consists of a corrugated material.

Such a reinforcing element of a corrugated material arranged in the profile element channel provides the required rigidity and stability to the outer frame. The corrugated material is a relatively lightweight material with good stability, but a material that is also easy to handle and mount into to the profile element channel.

According to another embodiment, the reinforcing element may comprise or consist of corrugated fiber board and/or corrugated plastic.

These materials have good qualities regarding weight, stability, and environmental influence. These materials will contribute to the stability and rigidity of the outer frame. Corrugated fiber board is, for example, a material with such qualities, while being easy to fold and mount into the profile element.

According to another embodiment the reinforcing element may extend continuously within the channels of at least two adjacent profile element portions.

In this way, an enhanced stability is provided, especially in the corners of the outer frame. Furthermore, the risk of unintentionally disassembling of the outer frame may also be provided.

According to a second aspect of the invention, there is provided a fluid filter comprising a filter element and the above-mentioned outer frame.

Such a filter benefits from the above outer frame with all the advantages thereof.

The filter element for filtering fluids may be an air cleaning filter element.

### Brief Description of the Drawings

The invention will be understood and appreciated more fully from the following detailed description, taken in conjunction with the drawings, in which:
Fig. 1 is a schematic view of a filter comprising an outer frame according the present invention.
Fig. 2 is a schematic top plan view of an outer frame according to the present invention.
Fig. 3 is a plan view of a first embodiment of a profile element of an outer frame, in its folded out position.
Fig. 4 is a plan view of the profile element of Fig. 3, in a partly folded position.
Fig. 5 is a plan view of a profile element of Figs. 3, and 4, during assembly.
Fig. 6 is a cross sectional view, taken along the line I-I of Fig 2, of a profile element portion and a reinforcing element according to a first embodiment.
Fig. 7 is a cross sectional view, taken along the line I-I of Fig 2, of the profile element portion of Fig. 6.
Fig. 8a shows a cross section of the unfolded profile element of Fig. 3, taken along the line II-II of Fig 3.
Fig. 8b shows the profile element portion of Fig. 8a, partly folded.
Fig. 9 is a cross sectional view, of a reinforcing element and a profile element portion according to a second embodiment.
Fig. 10 is a cross sectional view, of a profile element portion according to a second embodiment.
Fig. 11 is a cross sectional view of an unfolded profile element according to the second embodiment.

### Detailed Description of Embodiments

The present invention will be described more fully hereinafter with reference to the accompanying drawings, in which embodiments of the invention are shown. The invention may, however, be embodied in many different forms and should not be construed as limited to the embodiments set forth herein; rather these embodiments are provided so that this disclosure will be thorough and complete, and will fully convey the scope of the invention to those skilled in the art. In the drawings, like numbers refer to like elements.

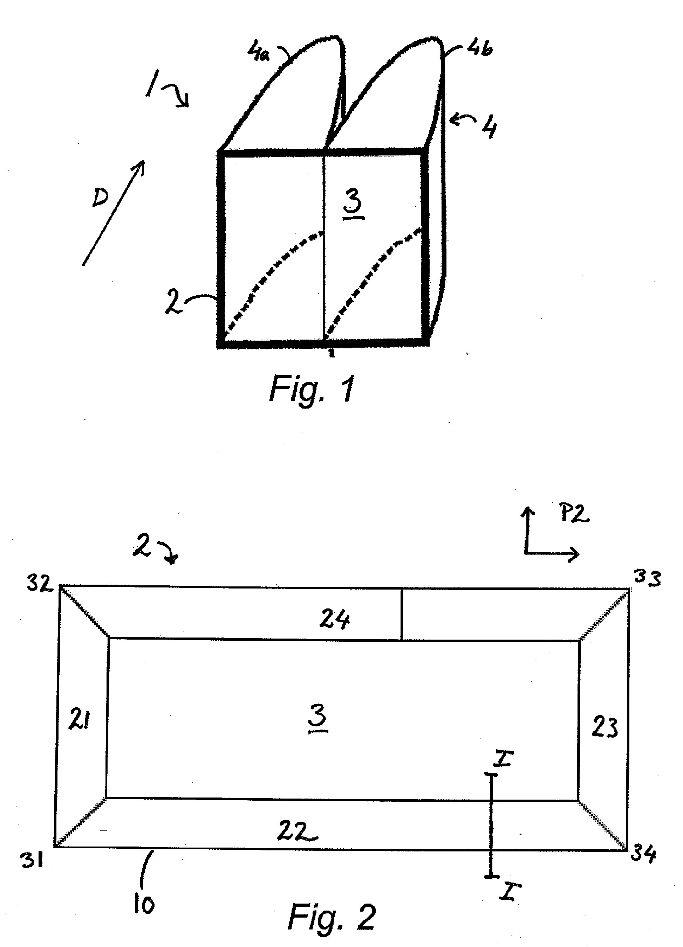

Fig. 1 shows a filter 1 having a filter element 4 and an outer frame 2 in accordance with the present invention. In the embodiment shown in Fig. 1, the filter is a pocket filter and the filter element 4 comprises two pockets 4a, 4b. The outer frame 2 according to the present invention may be used for various types of fluid filters, e.g. air cleaning filters, such as pocket filters, pleated panel filters, HEPA filters, panel filters etc. The fluid filter may be an air cleaning filter.

The filter may also comprise inner frames, arranged on the filter compartments in order to join the compartments to each other and/or to the outer frame 2.

As shown in Fig. 1, the outer frame 2 defines an inlet 3, through which a fluid, such as air, is supposed to flow into the filter element in the direction D.

In Fig. 2, an embodiment of an assembled outer frame is shown.

The outer frame 2 may have the shape of a parallelepiped, such as a rectangle, as shown Fig. 2. The rectangular outer frame 2 shown in Fig. 2 has four sides 21, 22, 23, 24, connected at the four corners 31, 32, 33, 34.

The outer frame 2 of the present invention comprises a profile element 10, defining the outer shape of the outer frame 2.

The profile element 10 may be integrally formed from one piece of material. It can also be made from separate parts of material.

According to a general embodiment of the invention, the profile element is made from or comprises paper, metal and/or a plastic material.

Such a plastic material may, for example, be of polyolefin, in particular polyethylene and/or polypropylene. The plastic material may also be a biodegradable plastic material, such as a plastic material of polylactic acid. Combination of the plastic materials may be possible.

### First embodiment

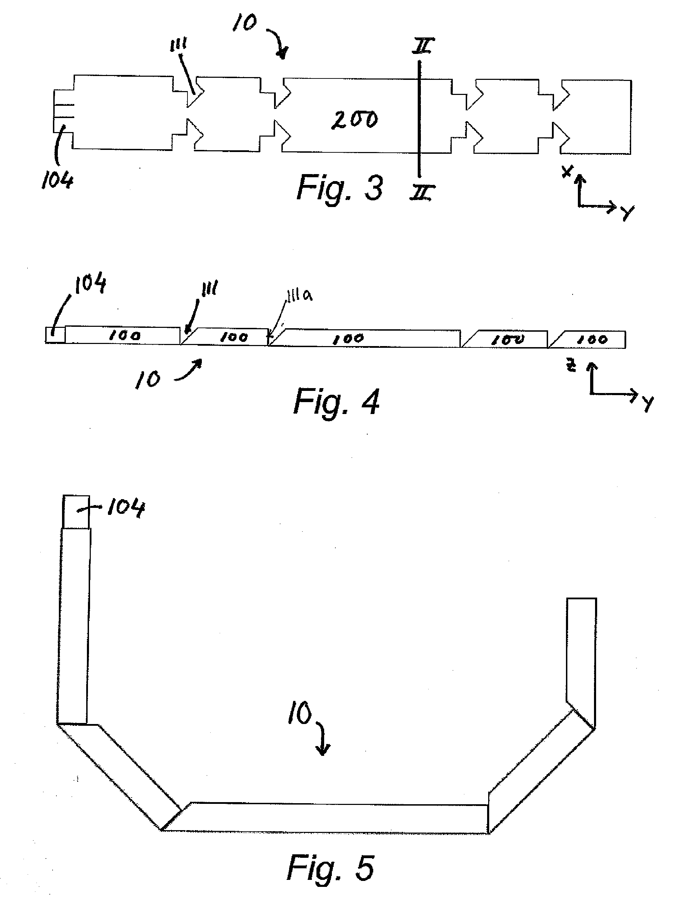

According to a first embodiment, the profile element is constructed from one piece of sheet material, as shown in Fig. 3. The piece of sheet material may be formed by extruding of for example a plastic material as is well-known in the art.

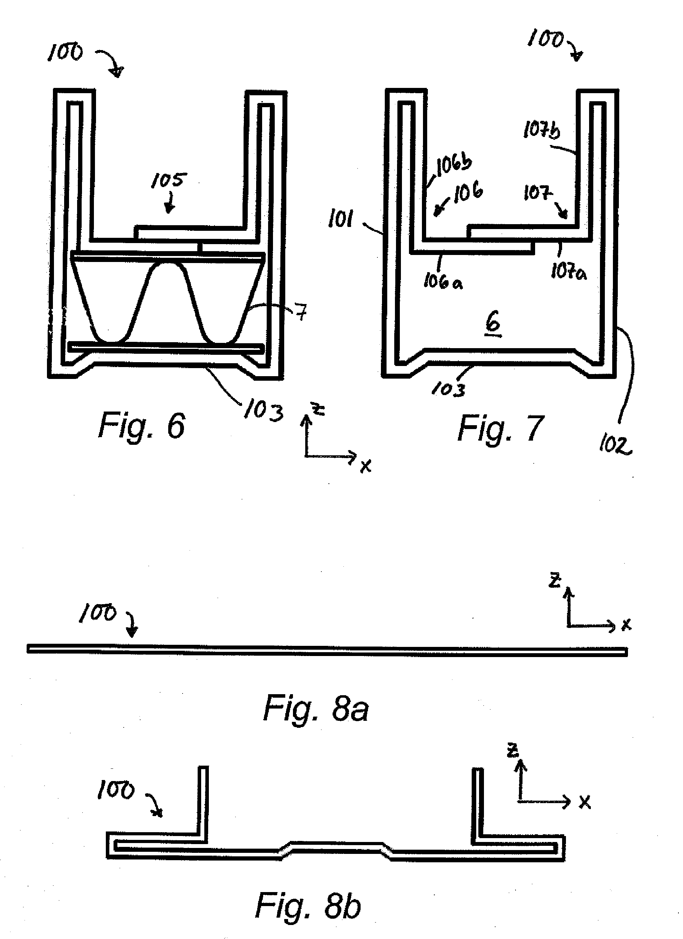

A cross section of the piece of sheet material of Fig. 3 is shown in Figs. 8a-b. The piece of sheet material is folded along folding lines such that it will get the appearance shown in cross section in Figs. 6 and 7.

Folding of the sheet material along folding lines also results in the possibility of providing straightness to the profile element portions 100. The folding lines as such may provide the straightness.

The profile element 10 may comprise a plurality of profile element portions 100. The profile element portions 100 may be formed integrally, as shown in the figures herein, or from separate parts.

Each side 21, 22, 23, 24 of the assembled outer frame may comprise one or several profile element portions 100. In the embodiments shown in the figures herein, one side 24 will comprise two profile element portions 100, connected to each other by means of a connecting element 104, whereas the other sides 21, 22, 23 will comprise one profile element portion 100 each.

As best shown in Figs. 3 and 4, there are corner cut-outs 111 in the ends of the profile element portions. These corner cut-outs are present in order to make it possible to create the corners 31, 32, 33, 34 of the outer frame 2, by means of folding.

In Fig. 5, a profile element is shown during assembly to an outer frame. The connecting portion 104 may e.g. be tongues protruding from one end of the profile element, arranged to be connected by means of overlap to the other end of the profile element. In this way, a possibility of an easy assembling of the outer frame is provided.

According to another embodiment, the form of the sheet material is used for assembling in a form-fit manner, i.e. a first open end of a folded sheet is inserted within a corresponding second open end of a folded sheet.

Attachment of the filter element to the outer frame is made according to methods well known by persons skilled in the art, and will not be described further herein. Examples of attaching the filter element 4 to the outer frame 2 are by means of staples, adhesive and clamps.

In Figs 6 and 7, cross sections of a profile element portion 100 according to a first embodiment of the invention are shown. According to this embodiment, the profile element portions are formed integrally from one single piece of sheet material, as shown in Fig. 3.

The profile element portions are made up by folding the piece of sheet material along predefined folding lines/marks. The methods used for creating the folding lines are well known by persons skilled in the art, and will not be discussed further herein.

The profile element portion has a longitudinal direction Y, a transversal direction X, as shown in the figures.

The cross section of each profile element portion has an essentially U-shaped periphery. The profile element shown in Figs. 6 and 7 has a base wall 103, substantially extending in an XY-plane and first and second opposing side walls 101, 102, substantially extending in an YZ-plane, perpendicular to the XY-plane. The side walls 101, 102 may also extend at other angles relative to the X-direction.

In the assembled outer frame 2 the base wall 103 will be distal to the inlet 3 defined by the outer frame 2. The X direction of the profile elements 100 will be essentially parallel to the direction of flow D of the fluid to be filtered (see Fig. 1).

In the assembled outer frame according to the embodiments described herein, the side walls 101, 102 will extend in planes that are essentially parallel to a main extension plane P2 of the outer frame 2 (see Fig. 2).

According to a non-limiting example of the first embodiment, the width of the base wall is about 18 mm, and the height of the side walls is about 20-22 mm. The thickness of the sheet material is about 1 mm, when using a plastic material.

The base wall and the side walls define an inner hollow space of the profile element portion 100. The inner space defines a channel 6, extending in a longitudinal direction Y of the profile element portion (e.g., see Fig. 7). In the assembled profile element 10 the channel 6 will extend along the profile element 10.

A reinforcing element 7 is positioned in the channel 6 (e.g. see Fig. 6). The reinforcing element may be constructed from one or several pieces of material. The reinforcing element 7 may be mounted into the profile element 10, during the forming of the profile element 10 and the outer frame.

According to one embodiment of the invention, the reinforcing element 7 is made from one elongate piece of material, having essentially the same length as the profile element 10. Such a reinforcing element 7 provides rigidity and stability to the outer frame, and minimizes the risk that the outer frame disassembles unintentionally.

The profile element may be essentially rectangular, having a width which is essentially equal to the distance between the side walls 101, 102 of the profile element portions.

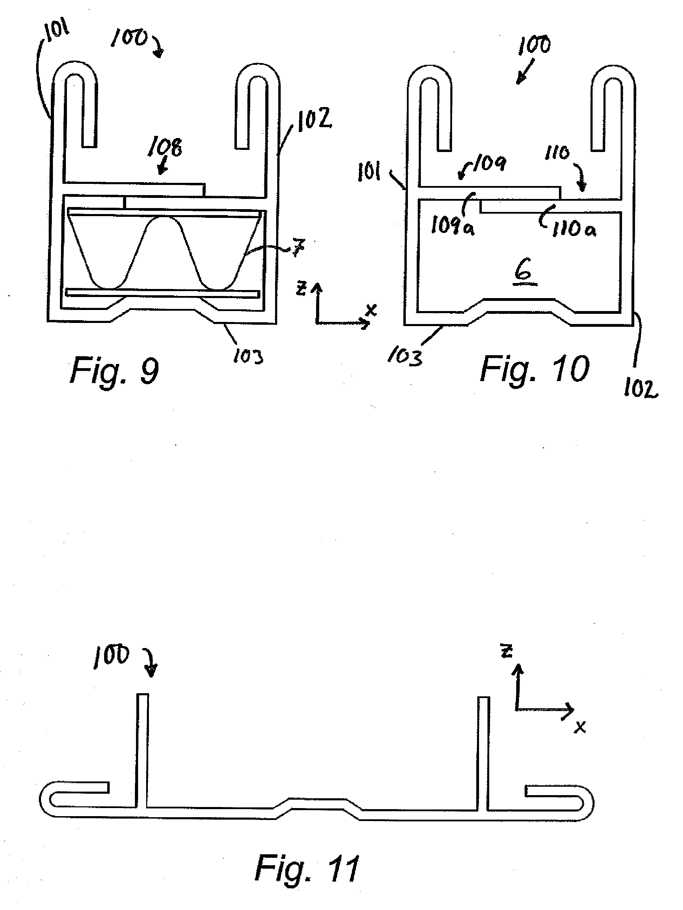

Cross sections of a reinforcing element 7, positioned in a channel, are shown in Figs. 6 and 9. The reinforcing element may have an essentially rectangular cross section, as shown in Figs. 6 and 9.

The reinforcing element may e.g. be made or comprise corrugated fiber board and/or a corrugated plastic material.

An example of a suitable corrugated fiber board has the following layers:
280 g kraftliner
140 g semi-chemical flute
220 g testliner, type 3
140 g semi-chemical flute
280 g kraftliner.

It is important that the reinforcing element provides stability and rigidity to the outer frame, such that the materials used for the profile element can be thinner than if a reinforcing element would not have been used. Thus, the reinforcing element and its material should provide such a rigidness and stability. Therefore, the material cannot be a material that does not provide this. For example the material may not be soft plastic foam.

The reinforcing element may comprise one or several pieces. According to the embodiments shown in the figures, the reinforcing element is made from one single elongate piece of corrugated fiber board.

It is advisable that an integral piece of a reinforcing element extends between two adjacent profile element portions of the assembled outer frame, such that the requested stability is obtained in the corners 31, 32, 33, 34 of the outer frame.

As shown in Figs. 6, and 7, the profile element portion has a securing element 105, which is arranged to secure the reinforcing element in the channel.

In the embodiment shown in figures 6-8, the securing element 105 is created by means of folding the piece of sheet material along predefined folding lines/marks, in the same way as the side walls 101, 102 are created.

The securing element comprises a first locking portion 106 which is connected to the first side wall 101. The first locking portion has a protruding portion 106a extending in a direction essentially parallel to the base wall 103. This protruding portion extends towards the second side wall 102, and prevents the reinforcing element 7 from falling out of its position in the channel 6. An interconnecting portion 106b of the first locking portion connects the first side wall 101 and the protruding portion 106a.

The securing element 105 can also comprise a second locking portion, 107 as shown in figures 6 and 7. This second locking portion 107 connected to the second side wall 102. The second locking portion 107 has a protruding portion 107a extending in a direction essentially parallel to the base wall 103. This protruding portion 107a extends towards the first side wall 101, and cooperates with the protruding portion 106a of the first locking portion 106 in preventing the reinforcing element 7 from falling out of its position in the channel 6. An interconnecting portion 106b of the first locking portion connects the first side wall 101 and the protruding portion 106a. There can be an overlap between the protruding portions. An interconnecting portion 107b of the second locking portion 107 connects the first second wall 102 and the protruding portion 107a.

The protruding portions 106a, 107a can be secured to each other with a fastening means. The fastening means can e.g. be staples, adhesive or by means of welding.

### Second embodiment

A second exemplary embodiment of a profile element is shown in Figs. 9-11. Regarding this second embodiment, only the differences from the first embodiment will be described hereinafter.

Fig. 11 shows a cross section of a piece of material which is used to create the profile element portion according to the second embodiment. As can be seen from the figure, the initial cross section is not flat, as in the first embodiment. Two ridges, arranged to define the securing element 108 extend along the longitudinal direction of the piece of material used in making the profile element.

Furthermore, the longitudinal edges of the piece of material are essentially J-shaped.

The profile element portion is made from a piece of material having the cross section of Fig. 11, by means of folding along two folding lines only, such that the side walls 101, 102 of the profile element portion are created.

In this embodiment the securing element comprises a first locking portion 109 which is connected to the first side wall 101. The first locking portion has a protruding portion 109a extending in a direction essentially parallel to the base wall 103. This protruding portion extends towards the second side wall 102, and prevents the reinforcing element 7 from falling out of its position in the channel 6. The protruding portion 109a is directly connected to the first side wall 101. The securing element may also comprise a second locking portion 110, having a protruding portion 110a extending in a direction essentially parallel to the base wall 103. This protruding portion extends towards the first side wall 101, and cooperates with the first protruding portion 109a in preventing the reinforcing element 7 from falling out of its position in the channel 6. The protruding portion 110a is directly connected to the second side wall 102.

The protruding portions 109a, 110a can be secured to each other with a fastening means. The fastening means can e.g. be staples, adhesive or by means of welding.

### Further embodiments

In the embodiments of the outer frame discussed above, the outer frame is formed by first folding piece of sheet material (e.g. see Fig. 3.) or pieces of sheet material along folding lines such that profile element portions 100 are formed with the appearance shown in cross section in Figs. 4, 6 and 7. The profile elements portions are then used to form the profile element of the outer frame, by folding and/or connecting the profile element portions at the end of the profile element portions. During the forming of the outer frame, the reinforcing element or reinforcing elements is/are mounted so as to be arranged in the channel of the profile element 10.

As discussed above there are corner cut-outs 111 in ends of the profile element portions 100. These corner cut-outs are present in order to make it possible to create the corners 31, 32, 33, 34 of the outer frame 2, by means of folding, for example.

According to one embodiment, at least one of the cut-outs 111 may form an edge 111 a of a side wall 101, 102 at an end of a profile element portion 100. This is best illustrated in Figs. 3 and 4. In the final outer frame (Fig. 2), the edge 111a will form an end edge 111a (see Fig. 4) of a side wall 101, 102 portion that extends in a substantially perpendicular direction relative the longitudinal direction of the side wall 101, 102 (see Fig. 4). This end edge 111a will aid in fluid-tightly closing the outer frame corner 31, 32, 33, 34 by forming a material overlap and/or material contacts between profile element portions 100 and their wall portions 101, 102, 103.

According to a further embodiment, the frame corners 31, 32, 33, 34 may be sealed and/or secured by means of welding, for example.

According to another embodiment, the reinforcing element may be enclosed in a closed channel 6 as, for example, shown in Figs. 6 and 9, the channel being, for example, defined by the walls 101, 102, 103 of the profile element portion 100 and the securing element 105, 108. Such an arrangement may provide a very good stability and rigidity to the outer frame.

In the drawings and specification, there have been disclosed embodiments and examples of the invention and, although specific terms are employed, they are used in a generic and descriptive sense only and not for the purpose of limitation, the scope of the invention being set forth in the following claims.

## Claims

1. An outer frame for a fluid filter (1), which outer frame (2) defines an inlet (3) which is adapted to receive a filter element (4), the outer frame comprising
a profile element (10), defining a channel (6);
**characterized in that** the outer frame (2) comprises a reinforcing element (7) comprising a corrugated material, the reinforcing element being arranged within the channel (6) of the profile element (10).

2. The outer frame according to claim 1, wherein the profile element is formed by a plurality of profile element portions (100), the cross-section of each profile element portion (100) having an essentially U-shaped periphery.

3. The outer frame according to claim 2, wherein each profile element portion (100) has a base wall (103), distal to the inlet (3), and first (101) and second (102) opposing side walls (101, 102), extending in a plane at an angle to a main plane of the base wall, thereby defining the channel (6) which is arranged to receive the reinforcing element (7).

4. The outer frame according to claim 3, wherein each profile element portion (100) has a securing element (105, 108), arranged to secure the reinforcing element in the channel.

5. The outer frame according to claim 4, wherein the securing element (105, 108) comprises a first locking portion (106, 109), connected to the first side wall (101), and having a portion (106a, 109a) extending in a direction essentially parallel to the base wall, towards the second side wall (102).

6. The outer frame according to claim 5, wherein the securing element (105, 108) comprises a second locking portion (107, 110), connected to the second side wall (102) and having a portion (107a, 110a) extending in a direction essentially parallel to the base wall, towards the first side wall (101).

7. The outer frame according to any one of claims 2-6, wherein a profile element portion (100) is formed by folding one piece (200) of material into a requested shape.

8. The outer frame according to any of claims 2-7, wherein at least two profile element portions (100) are formed integrally.

9. The outer frame according to any of the preceding claims, wherein the profile element (10) comprises or consists of a plastic material, a metal and/or paper.

10. The outer frame according to claim 8, wherein the profile element is made of a plastic material.

11. The outer frame according to claim 9, wherein the profile element is made of a biodegradable plastic material.

12. The outer frame according to any one of the preceding claims, wherein the reinforcing element consists of a corrugated material.

13. The outer frame according to any one of the preceding claims, wherein the corrugated material is corrugated fiber board and/or corrugated plastic.

14. The outer frame according to any one of claims 2-13, wherein the reinforcing element (7) extends continuously within the channels (6) of at least two adjacent profile element portions (100).

15. A fluid filter comprising a filter element (4) and an outer frame (2) according to any one of the preceding claims.
